# EUROPEAN PATENT APPLICATION

(11) **EP 0 832 895 A2**
(43) Date of publication of application: **01.04.1998**
(21) Application number: 97307677.1
(22) Date of filing: 30.09.1997
(51) Int. Cl.: C07F 7/16

(54) **Preparation of alkylhalosilanes**

(30) Priority: 30.09.1996 JP 278859/96
(71) Applicant: SHIN-ETSU CHEMICAL CO., LTD., Chiyoda-ku Tokyo (JP)
(72) Inventor: Nakanishi, Tetsuo, Shin-Etsu Chemical Co., Ltd., Matsuida-machi, Usui-gun, Gunmaken (JP); Noguchi, Naoya, c/o Gunma Complex, Annaka-shi, Gunma-ken (JP); Tsukioka, Kazumasa, c/o Gunma Complex, Annaka-shi, Gunma-ken (JP); Nakayama, Hiroshi, c/o Gunma Complex, Annaka-shi, Gunma-ken (JP); Satoh, Yukinori, c/o Gunma Complex, Annaka-shi, Gunma-ken (JP)
(74) Representative: Stoner, Gerard Patrick

(57) **Abstract**

An alkylhalosilane is prepared by charging a reactor with a contact mass comprising a metallic silicon powder and a copper catalyst and feeding a reactant gas containing an alkyl halide into the reactor whereby the silane is formed by direct synthesis. A high rate of formation of the silane is achievable by selecting the metallic silicon powder in accordance with its Cl content on the surface, preferably a metallic silicon powder having a surface Cl content of at least 1 ppm/m².

## Description

This invention relates to an improvement in the direct process for preparing an alkylhalosilane and more particularly, to a process for continuously preparing an alkylhalosilane by gas-solid contact reaction between metallic silicon and alkyl halide in the presence of a copper catalyst.

With respect to the synthesis of alkylhalosilanes, Rochow first disclosed in USP 2,380,995 direct synthesis reaction between metallic silicon and an alkyl halide in the presence of a copper catalyst. Since then, there have been reported a number of research works relating to various cocatalysts used together with copper catalysts, various copper catalysts and treatment thereof, reactors, additives used during reaction, and the like.

The direct synthesis process involves activating a contact mass comprising metallic silicon and a copper catalyst and introducing an alkyl halide into the activated contact mass for accomplishing gas-solid direct contact between metallic silicon and alkyl halide, thereby producing alkylhalosilanes. The period required to activate the catalyst to the contact mass is defined by R. J. H. Voorhoeve, Organohalosilanes, 1967, pp. 250-251, as a time taken until a phase of Cu₃Si active in direct synthetic reaction (η phase) is formed in the contact mass. This is generally known as an "induction period." Various methods have been proposed for reducing the induction period.

JP-B 43400/1988, for example, discloses an alkylhalosilane producing method involving charging a reactor with silicon, catalyst and co-catalyst, passing nitrogen through the reactor, heating the reactor up to 200°C, admitting methyl chloride, heating the reactor up to 345°C, maintaining the temperature for 1 hour, and thereafter, cooling the reactor to 330°C. This method allows a larger amount of methyl chloride to be admitted. It is described that the reaction mass should be treated above 340°C for about 20 to 30 minutes when reaction is done at a temperature below 340°C, and that such treatment is unnecessary when reaction is done at a temperature above 340°C or when copper chloride is used. That is, according to this method, the reactants are once heated to a temperature above the normal reaction temperature and the temperature is then lowered for reaction to continue. Once heated to the elevated temperature, however, the copper catalyst is spent and likely to lower its catalytic activity at lower temperatures. The procedure of once heating and then cooling to the normal reaction temperature is undesirable from the energy standpoint because the reaction of alkyl halide with metallic silicon is exothermic. This is disadvantageous especially in the case of commercial scale reactors. Additionally, the cooling step takes a long time. If a long time is passed until the normal reaction temperature is reached, there is a likelihood of failure to activate the catalyst.

JP-A 187933/1986 discloses another alkylhalosilane producing method involving passing nitrogen through a reactor charged with metallic silicon and copper catalyst for fluidization, heating the reactor at 325°C, passing HCl gas for 75 minutes to produce trichlorosilane, thereafter charging the reactor with an accelerator, and feeding methyl chloride for reaction to continue. This method, however, uses as one reactant HCl, which can corrode the reactor, piping and fittings. The HCl left in the reactor causes to lower the yield of dialkyldihalosilane during reaction.

Furthermore, JP-B 40035/1989 discloses pretreatment by heating a mixture of silicon powder, catalyst, and cocatalyst to 300°C and then introducing an equimolar mixture of dimethyldichlorosilane and methyl chloride. This method, however, is less effective to activate the catalyst. Even if the catalyst is activated, the dialkyldihalosilane used in the pretreatment goes to waste and a long time is taken to activate the catalyst. As a result, the copper catalyst undergoes long-term thermal hysteresis and is eventually sintered. This results in a shorter lifetime and lower selectivity of the catalyst.

In summary, prior art alkylhalosilane producing methods suffer from the following problems associated with the activation of the contact mass. (1) The copper catalyst can be sintered during long-term thermal hysteresis at elevated temperature, resulting in the catalyst losing lifetime and selectivity. (2) Excessive heating is disadvantageous from the energy standpoint. (3) A component not participating in reaction such as HCl and dialkyldihalosilane is used with a concomitant lowering of selectivity.

For evaluating the reactivity that metallic silicon itself originally possesses, JP-A 234776/1994 discloses a method for quantitatively determining the dispersion state of intermetallic compounds in metallic silicon and the standard of selection for reactivity control. The structural quality factor QF of metallic silicon on its surface is determined by sectioning metallic silicon. Allegedly, metallic silicon having a QF of 18 to 60 is most reactive and preferable to use. This method, however, is disadvantageous in that a photograph showing the interior of metallic silicon must be taken by sectioning the surface of metallic silicon. Since the bulk structure is compared, the active state of metallic silicon surface which is important in the direct synthesis reaction is not directly available.

Therefore, an object of the present invention is to provide a novel and improved method for preparing an alkylhalosilane by direct synthesis in such a manner that the rate of formation of alkylhalosilane may be controlled and the secondary treatment required in the prior art contact mass activating step may be eliminated.

Making investigations on the method for preparing an alkylhalosilane by commercially advantageous direct synthesis, especially the step of activating the catalysis of the contact mass at the start of reaction while ensuring a long life and high selectivity to the catalyst, we have found that a content of chlorine (Cl) present on the surface of metallic silicon powder largely affects reactivity. Therefore, the rate of formation of alkylhalosilane can be selected by selecting the metallic silicon powder in accordance with its chlorine content on the surface. Particularly when a metallic silicon powder having a chlorine content of at least 1 ppm per square meters of the surface, more preferably at least 10 ppm/m² is used, reaction starts and continues smoothly without a need for secondary treatment such as activation of metallic silicon by HCl or silanes in the catalyst activating step. The problems of the prior art catalyst activating step are concurrently solved. Using a metallic silicon powder having a chlorine content of at least 1 ppm/m², especially at least 10 ppm/m², alkylhalosilanes can be formed at a high rate and dialkyldihalosilane be obtained at high selectivity.

According to the invention, there is provided a process for preparing an alkylhalosilane of the general formula (I):

RₙSiX₄₋ₙ (I)

wherein R is an alkyl group having 1 to 4 carbon atoms, X is a halogen atom, and letter n is an integer of 0 to 4, comprising the steps of charging a reactor with a contact mass comprising a metallic silicon powder and a copper catalyst and feeding a reactant gas containing an alkyl halide into the reactor whereby the silane is formed by direct synthesis.

The rate of formation of the silane is selected by selecting the metallic silicon powder in accordance with its chlorine content on the surface. Preferably, the metallic silicon powder has a chlorine content per surface area of at least 1 ppm/m².

Briefly stated, the process of the present invention is to prepare an alkylhalosilane through direct synthesis from metallic silicon powder and an alkyl halide in the presence of a copper catalyst.

The metallic silicon used herein should preferably have a purity of at least 97% by weight, especially at least 98% by weight. Preferred is metallic silicon powder obtained by pulverizing metallic silicon to an appropriate particle size. Where the reactor used is a fluidized bed reactor or agitation reactor, metallic silicon powder having a particle size of 5 to 150 µm is preferred in order that the metallic silicon powder be appropriately free flowing in the reactor. Note that the term "particle size" used herein is a particle size corresponding to 50% of a mass base cumulative oversize distribution curve by sieve analysis.

According to the invention, the metallic silicon powder used is selected on the basis of a content of chlorine present on the surface thereof. The higher the chlorine content, the more smoothly the reaction starts, the higher the activity becomes, and the higher the production efficiency of alkylhalosilane becomes.

The chlorine content on the metallic silicon surface is measured by dispersing a metallic silicon powder having a known specific surface area in water (deionized or distilled water) to extract the chlorine and measuring the quantity of extracted chlorine by ion chromatography. A chlorine content per surface area of metallic silicon is obtained in this way. The specific surface area used herein is a specific surface area as measured by a high-pressure air permeability technique. The extraction of chlorine is carried out by dispersing 5 grams of metallic silicon in 20 grams of water and shaking the dispersion for 2 hours in air at room temperature (20 to 25°C) by means of a shaker.

A metallic silicon powder having a chlorine content of at least 1 ppm per square meters of the surface, more preferably at least 10 ppm/m², most preferably 30 to 80 ppm/m² is preferred because it has sufficient activity for reaction to start smoothly and eliminates a need for secondary treatment for activating the contact mass.

Such a metallic silicon powder having a surface chlorine content of at least 1 ppm/m² may be selected from those metallic silicon powders obtained by reducing SiCl₄, SiHCl₃, etc. and those metallic silicon powders obtained by reacting quartz or silica with carbon in an electric furnace insofar as the necessary parameters are met.

For the copper catalyst, any form of copper may be used, for example, elemental copper such as copper powder and stamped copper, copper alloys such as Cu-Si, Cu-Zn, Cu-Sn, and Cu-Zn-Sn, and copper compounds such as cuprous oxide, cupric oxide, and copper halides. The copper catalyst may be loaded in the reactor alone or as an alloy together with metallic silicon powder. The loading of the copper catalyst is preferably about 0.1 to 15 parts, especially about 1 to 10 parts by weight of copper per 100 parts by weight of the metallic silicon powder.

Together with the copper catalyst, an accelerator such as metallic zinc powder and metallic antimony powder may be used according to a well-known technique. The accelerator may be used separately or as an alloy with copper.

Alkyl halides are reacted with metallic silicon to form alkylhalosilanes. The alkyl halides used herein are those having 1 to 4 carbon atoms, for example, methyl chloride, ethyl chloride, propyl chloride, methyl bromide, and ethyl bromide. Among these, methyl chloride is commercially most useful. Dimethyldichlorosilane prepared using methyl chloride finds numerous applications as a raw material for a variety of silicone resins. Desirably the alkyl halide reactant is previously heated and gasified before it is fed into the reactor. The alkyl halide gas may be used alone or in admixture with an inert gas. The feed amount of alkyl halide gas is calculated as an amount (combined with the inert gas) necessary to fluidize the contact mass and hence, properly determined from the diameter of a reactor used and a superficial velocity in a column.

In the step of heating the contact mass or activating catalysis of the contact mass, an inert gas is used for fluidizing the contact mass in the reactor. The inert gas used herein includes argon and nitrogen, with the nitrogen being preferred for economy. The flow velocity of inert gas may be at least the velocity at which the contact mass starts fluidizing, especially about 5 times the fluidization starting velocity. If the flow velocity of inert gas is below this range, uniform fluidization of the contact mass would be difficult. If the flow velocity of inert gas is beyond this range, more metallic silicon powder would scatter and the loss of inert gas and heat would increase. It is preferred to flow the inert gas in a circulating manner. These conditions may be properly selected.

After the contact mass is given catalytic activity as mentioned above, the alkyl halide is conventionally introduced into the reactor whereby gas-solid contact reaction takes place between the alkyl halide and metallic silicon to form an alkylhalosilane. The reaction temperature may be in the same range as in conventional processes, preferably 250 to 350°C, especially 280 to 300°C.

### EXAMPLE

Examples of the present invention are given below by way of illustration and not by way of limitation. All parts are by weight. It is noted that alkylhalosilane products contain dialkyldihalosilane (D), trialkylhalosilane (M), alkyltrihalosilane (T), etc. and that the formation rate of dialkyldihalosilane is represented by a space time yield (STY) which is the weight of crude alkylhalosilanes produced per unit time relative to the weight of metallic silicon held in the reactor.

### Grade of metallic silicon

Several metallic silicon powders (Sil to Si4) were measured for a chlorine content on the surface by the previously described method. They were also measured for structural quality factor QF by the method described in JP-A 234776/1994. The results are shown in Table 1.

### Reaction experiment

A fluidized bed reactor of carbon steel having a diameter of 80 mm and a height of 1,150 mm was charged with 100 parts of metallic silicon powder and 3 parts of a catalyst mixture consisting of metallic copper powder, metallic antimony powder and metallic zinc powder.

Thereafter, methyl chloride was admitted into the reactor at a flow velocity of 7 cm/sec. and the temperature within the reactor was increased to 290°C for reaction to continue. Reaction was terminated after 5 hours. Table 1 shows the accumulative T/D and STY from the start to the end of reaction. Note that T/D is the weight (g) of methyltrichlorosilane divided by the weight (g) of dimethyldichlorosilane, both contained in the methylchlorosilanes produced. STY representative of a rate of formation of alkylhalosilane is equal to [the weight (g) of alkylhalosilanes]/[the weight (kg) of metallic silicon x hour (hr)]. Table 1 also reports the proportion of dimethyldichlorosilane (D) and the proportion of high-boiling products (R) relative to the entire amount of methylchlorosilanes produced. Note that the high-boiling products are those products having a boiling point of higher than 70°C under atmospheric pressure, such as disilanes in the methylchlorosilanes produced.

**Table 1**

| | Si1 | Si2 | Si3 | Si4 |
|---|---|---|---|---|
| Cl (ppm/m²) | 72.9 | 66.1 | 37.5 | 9.7 |
| QF | 0.1 | 0.1 | 3 | 5 |
| STY (g/kg·hr) | 163.3 | 132 | 99.6 | 59.6 |
| D (wt%) | 83.9 | 82.2 | 82.2 | 75.3 |
| R (wt%) | 3.3 | 2.2 | 2.4 | 2.2 |
| T/D | 0.08 | 0.12 | 0.11 | 0.18 |

It is evident from Table 1 that alkylhalosilanes are formed at a high rate (STY) and dimethyldichlorosilane is obtained in a high yield when the metallic silicon powder used has a surface Cl content of at least 1 ppm/m², especially at least 10 ppm/m².

According to the invention, the rate of formation of the silane can be selected by selecting the surface chlorine content of metallic silicon powder. Especially when a metallic silicon powder having a surface chlorine content of at least 1 ppm/m², preferably at least 10 ppm/m² is used, the contact mass is given long-lasting, high selectivity catalytic activity sufficient for reaction to start smoothly without a need for secondary treatment.

Although some preferred embodiments have been described, many modifications and variations may be made thereto in the light of the above teachings. It is therefore to be understood that within the scope of the appended claims, the invention may be practiced otherwise than as specifically described.

## Claims

1. A process for preparing an alkylhalosilane of the general formula (I):
RₙSiX₄₋ₙ (I)
wherein R is an alkyl group having 1 to 4 carbon atoms, X is a halogen atom, and letter n is an integer of 0 to 4, comprising the steps of charging a reactor with a contact mass comprising a metallic silicon powder and a copper catalyst, and feeding a reactant gas containing an alkyl halide into the reactor whereby the silane is formed by direct synthesis, characterized in that the rate of formation of the silane is selected by selecting the metallic silicon powder in accordance with its chlorine content on the surface.

2. The process of claim 1 wherein the metallic silicon powder has a chlorine content of at least 1 ppm per square meters of the surface.

3. The process of claim 2 wherein the metallic silicon powder has a chlorine content of at least 10 ppm per square meters of the surface.
